Europäisches Patentamt

European Patent Office

Office européen des brevets

(19)

(11) Veröffentlichungsnummer: **0 272 566 B1**

(12) **EUROPÄISCHE PATENTSCHRIFT**

(45) Veröffentlichungstag der Patentschrift: **11.03.92**

(51) Int. Cl.5: **C08G 18/08**, C08G 18/28, C08G 18/32, C08G 18/40, C08G 18/66, C09J 175/04

(21) Anmeldenummer: **87118444.6**

(22) Anmeldetag: **12.12.87**

(54) **Wässrige Polyurethan-Klebstoff-Dispersionen.**

(30) Priorität: **20.12.86 DE 3643791**

(43) Veröffentlichungstag der Anmeldung:
**29.06.88 Patentblatt  88/26**

(45) Bekanntmachung des Hinweises auf die Patenterteilung:
**11.03.92 Patentblatt  92/11**

(84) Benannte Vertragsstaaten:
**BE DE ES FR GB IT NL SE**

(56) Entgegenhaltungen:
**EP-A- 0 103 174**
**EP-A- 0 148 392**
**DE-A- 3 516 806**
**US-A- 4 041 208**

(73) Patentinhaber: **BASF Aktiengesellschaft**
**Carl-Bosch-Strasse 38**
**W-6700 Ludwigshafen(DE)**

(72) Erfinder: **Hummerich, Rainer, Dr.**
**Grosser Riedweg 17**
**W-6520 Worms 27(DE)**
Erfinder: **Kerber, Michael, Dr.**
**Karlsruher Strasse 15**
**W-6940 Weinheim(DE)**
Erfinder: **Maempel, Lothar, Dr.**
**Spraulache 12**
**W-6835 Bruehl(DE)**
Erfinder: **Weyland, Peter, Dr.**
**Ludwigshafener Strasse 12 a**
**W-6710 Frankenthal(DE)**

## Beschreibung

Beschreibung

Die Erfindung betrifft die Verwendung von wäßrigen Dispersionen von Polyurethanen, die sich aufgrund ihres speziellen Aufbaus ausgezeichnet als Klebemittel mit hoher Belastbarkeit der Verklebung in der Wärme, bei gleichzeitig guten Anfangs- und Endfestigkeiten sowie Aktivierungseigenschaften eignen. Die Polyurethane sind durch hohe Kettenverlängereranteile, bezogen auf die Polyolkomponente, charakterisiert.

Wäßrige Dispersionen von Polyurethanen sind bekannt und z.B. in der DE-B 14 95 745 sowie Angew. Chem. 82 (1970), S. 53, und Angew. Makromol. Chem. 98 (1981), S. 133, beschrieben.

Die Produkte eignen sich für verschiedene Gebiete, u.a. auch zum Verkleben beliebiger Substrate. Bisherige Polyurethan-Dispersions-Kleber zeigen jedoch Mängel in der Eigenschaftskombination von Aktivierbarkeit, Anfangs-und Endfestigkeit und Wärmestandfestigkeit der Verklebung und sind daher für viele Anwendungen bei den heutigen hohen Anforderungen nur bedingt geeignet. Auch die in DE-A 28 04 609 beschriebenen Polyurethan-Dispersionen genügen als Klebemittel für Gummi nicht den Anforderungen.

Die in der DE-A 33 44 693 beanspruchten Klebstoffdispersionen erreichen zwar hohe Endfestigkeiten, bezüglich Anfangshaftung und Wärmestandsfestigkeit bei praxisgerechter Aktivierbarkeit ist jedoch kein Fortschritt erkennbar.

Speziell die mechanische Beanspruchung in der Wärme führt bei den bekannten Klebstoffen, auch auf Polyurethan-Dispersionsbasis, zur teilweisen Trennung der Verklebung. Durch Zugabe von höherfunktionellen Polyisocyanaten läßt sich bekanntermaßen die Beständigkeit der Klebungen bei Belastung in der Wärme auch bei Einsatz von wäßrigen Dispersionen erhöhen. Nachteilig an dieser Verfahrensweise ist jedoch bei Dispersionen, daß die Polyisocyanate in das wäßrige Medium oft nur unzureichend einarbeitbar sind. Zudem ist eine derartige Zubereitung nur begrenzt haltbar, da schon kurz nach der Isocyanatzugabe die Viskosität des Produkts ansteigen kann und das Klebstoffgemisch nach wenigen Stunden koaguliert bzw. geliert und damit völlig unbrauchbar wird. Zudem muß der Klebstoff unmittelbar vor Gebrauch am Ort der Verarbeitung aus zwei Komponenten gemischt werden. Dabei ergeben sich leicht Fehlklebungen. z.B. bei kleineren Klebstoffansätzen durch ungenaue Dosierung und bei größeren Ansätzen durch unzureichendes Mischen der Komponenten.

Aus der DE-A- 35 16 806 sind wäßrige Polyurethandispersionen für die Herstellung von Überzügen bekannt, die einen Gehalt an Perhydrobisphenol A im Polyurethan aufweisen.

In der EP-A- 103 174 wird die Herstellung von wäßrigen Polyurethandispersionen beschrieben, wobei Polyurethan-Präpolymere, welche niedermolekulare Kettenverlängerer enthalten, mit Polyisocyanaten vernetzt werden. Die Dispersionen werden für Überzüge verwendet.

Aufgabe der vorliegenden Erfindung sind nun wäßrige Dispersionen von Polyurethanen, die ohne Zusatz einer reaktiven Zweitkomponente als Klebstoffe bei guter Aktivierbarkeit des Klebefilms zu Verklebungen mit gegenüber dem Stand der Technik verbesserten Eigenschaftskombinationen von Wärmestandfestigkeit und Schälfestigkeiten führen.

Gegenstand der Erfindung ist die Verwendung von wäßrigen Dispersionen von Polyurethanen aus

a) organischen Polyisocyanaten und gegebenenfalls zusätzlich untergeordneten Mengen organischen Monoisocyanaten,

b) Polyesterpolyolen eines Molekulargewichtsbereichs von 500 bis 5 000 und gegebenenfalls zusätzlich bis zu 40 Gew.-%, bezogen auf die Gesamtmenge b) an Polyetherpolyolen des gleichen Molekulargewichtsbereichs,

c) organischen Hydroxylverbindungen eines Molekulargewichtsbereichs von 62 bis 400 mit zwei gegen Isocyanatgruppen reaktionsfähigen Endgruppen als Kettenverlängerer

d) Verbindungen mit Ionengruppen oder in Ionengruppen überführbaren Gruppen mit mindestens einer Isocyanatgruppe oder einer gegen Isocyanatgruppen reaktionsfähigen Hydroxyl- oder Aminogruppe,

e) gegebenenfalls monofunktionellen Polyetherolen und/oder Diolen mit seitenständigen Polyethersegmenten und jeweils mit mindestens 40 % Polyethylenoxid-Segmenten in der Etherkette.

f) gegebenenfalls mindestens zwei Aminogruppen tragenden Kettenverlängerern, die frei von Ionengruppen sind,

die einen über d) in das Polyurethan eingebauten Gehalt an ionischen Gruppen von 0,05 bis 2 mÄqu/g Polyurethan aufweisen und gegebenenfalls bis 10 Gew.-%, bezogen auf das Polyurethan, an end- und/oder seitenständigen Polyethylenoxid-Segmenten enthalten, die über e) in das Polyurethan eingebaut sind, dadurch gekennzeichnet, daß die Kettenverlängerer c) in einem Anteil von 1,5 bis 8 Mol je Mol Polyesterpolyolen und gegebenenfalls Polyetherpolyolen b) eingebaut sind, und das Verhältnis der Zahl der Isocyanatgruppen zur Zahl der insgesamt mit Isocyanat reaktionsfähigen Wasserstoffatome im Bereich von 0,9 bis 1,2 liegt, als Klebstoffe.

Die erfindungsgemäße Verwendung ergibt überraschenderweise Verklebungen, die trotz guter Aktivierbarkeit (80°C) hohe Wärmestandfestigkeiten zeigen. Gleichzeitig verfügen die Verklebungen über sehr gute Schälfestigkeiten. Diese Eigenschaftskombination wurde ohne Vernetzer bisher nicht erreicht.

Geeignete Polyisocyanate sind organische Verbindungen, die mindestens zwei freie Isocyanatgruppen aufweisen. Vorzugsweise werden Diisocyanate x(NCO)$_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethylcyclohexan, 4,4'-Diisocyanatodicyclohexyl-methyl, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, p-Xylylendiisocyanat, sowie aus diesen Verbindungen bestehende Gemische, wie besonders Gemische aus aliphatischen bzw. cycloaliphatischen und aromatischen Diisocyanaten im Molverhältnis 1 : 4 bis 5 : 1. Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Gegebenenfalls können bei der Herstellung der Polyurethane auch Monoisocyanate, z.B. Phenylisocyanat, Hexylisocyanat oder Dodecylisocyanat in untergeordneten, d.h. in bis zu 10 NCO-Äquivalent-% liegenden Mengen mitverwendet werden, wobei jedoch durch gleichzeitige Mitverwendung von höher als difunktionellen Komponenten ein vorzeitiger Kettenabbruch verhindert werden muß.

Bei den organischen Polyhydroxylverbindungen b) des Molgewichtsbereiches 500 bis 5000 handelt es sich um Polyesterpolyole, gegebenenfalls im Gemisch mit bis zu 40 Gew.-% (bezogen auf das Gemisch) Polyetherpolyolen.

Als Polyesterpolyole mit Molgewichten von 500 bis 5000, insbesondere von 800 bis 4000, vorzugsweise von 1400 bis 3000, sind Dicarbonsäurepolyesterpolyole, besonders -diole geeignet und/oder Polyesterole auf Lacton-Basis. Bei den Polyesterpolyolen, vor allem bei den -diolen handelt es sich um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanyhdrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren wie Ölsäure, Terephthalsäuredimethylester, Terephthalsäure-bis-glykolester. Als mehrwertige Alkohole kommen z.B. Ethylenglykol, Propylenglykol-(1,2) und -(1,3), Butandiol-(1,4) und -(2,3), Hexandiol-(1,6), Octandiol-(1,8), Neopentylglykol, Cyclohexandimethanol, (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, ferner Diethylenglykol, Triethylenglykol, Tetraethylenglykol, Polyethylenglykol, Dipropylenglykol, Polypropylenglykol, Dibutylenglykol und Polybutylenglykole in Frage. Die Polyester können auch endständige Carboxylgruppen aufweisen. Vorzugsweise werden Dicarbonsäurepolyesterdiole eingesetzt, deren Dicarbonsäure-Komponente zu mindestens 50 Carboxyläquivalent-%, besonders bevorzugt ausschließlich aus Adipinsäure und deren Polyol-Komponente, vorzugsweise zu mindestens 50 Hydroxyläquivalent-%, besonders bevorzugt ausschließlich aus Hexandiol-1,6 oder Butandiol-1,4 aufgebaut sind.

Bei den geeigneten Polyesterolen auf Lacton-Basis handelt es sich um Homooder Mischpolymerisate von Lactonen, bevorzugt um difunktionelle, endständige Hydroxylgruppen aufweisende Anlagerungsprodukte von Lactonen bzw. Lactongemischen, wie z.B. ε-Caprolacton, β-Propiolacton, γ-Butyrolacton und/oder Methyl-ε-caprolacton an geeignete difunktionelle Startermoleküle, z.B. die vorstehend als Aufbaukomponente für die Polyesterpolyole genannten niedermolekularen, zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Wesentlich für die Eignung der Lactonpolymerisate ist, daß sie zu mindestens 50 Gew.-% aus polymerisierten Lactonen bzw. polykondensierten, den Lactonen entsprechenden ω-Hydroxycarbonsäuren bestehen. Anstelle der Polymerisate von Lactonen können auch die entsprechenden, chemisch äquivalenten Polykondensate der den Lactonen entsprechenden Hydroxycarbonsäuren eingesetzt werden.

Auch Gemische der vorstehend genannten Polyesterpolyole können eingesetzt werden.

Die gegebenenfalls im Gemisch mit den Polyesterpolyolen einsetzbaren Polyetherpolyole, insbesondere -diole, sind die in der Polyurethan-Chemie an sich bekannten Produkte, die beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4' -Dihydroxy-diphenylpropan, Anilin hergestellt sein können.

Bei den Aufbaukomponenten c) handelt es sich um organische ionengruppenfreie, gegebenenfalls Ether- oder Estergruppen aufweisende Dihydroxylverbindungen und/oder difunktionelle Aminoalkohole des Molekulargewichtsbereiches 62 bis 400, vorzugsweise 62 bis 250. Diese Verbindungen werden erfindungsgemäß in einer Menge von 1,5 bis 8, vorzugsweise 2 bis 6, insbesondere 3 bis 5 Mol/Mol Polyhydroxylverbindung b) eingesetzt. Beispiele hierfür sind Ethylenglykol, Propylenglykol, Propandiol-(1,3), Neopentylglykol und besonders Butandiol-1,4, Hexandiol-1,6. Auch niedermolekulare Polyesterdiole, z.B. Adipinsäure-bis-(hydroxyethyl)-ester oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können verwendet werden.

Beispiele für Aminoalkohole sind Ethanolamin, Isopropanolamin, Methylethanolamin, Aminoethoxyethanol, 3-Aminopropanol, 2-Aminobutanol-1, Neopentanolamin.

Als Aufbaukomponenten d) werden Verbindungen eingesetzt, die mindestens eine, vorzugsweise zwei Isocyanatgruppen oder mindestens eine, vorzugsweise zwei gegenüber Isocyanatgruppen reaktionsfähige Gruppen und außerdem ionische Gruppen oder durch eine einfache Neutralisations- oder Quaternierungsreaktion in ionische Gruppen überführbare potentiell ionische Gruppen aufweisen. Hierzu gehören beispielsweise mit (potentiellen) ionischen Gruppen modifizierte Isocyanate, wie sie in DE-B 19 39 911, DE-B 22 27 111, DE-B 23 59 613 oder DE-B 23 59 614 beschrieben sind, beispielsweise freie Sulfonsäuregruppen aufweisende aromatische Polyisocyanate, wie sie durch Sulfonierung von aromatischen Polyisocyanaten, besonders von 2,4-Diisocyanatotoluol oder 4,4' -Diisocyanatodiphenylmethan zugänglich sind. Auch Isocyanate, die gegenüber Aminen als Quaternierungsmittel reagieren, z.B. Chlorhexylisocyanat, m-Chlormethylphenylisocyanat und 2,4-Diisocyanato-benzylchlorid oder Alkylsulfonsäureester-Gruppen aufweisende Isocyanate, z.B. 4-Isocyanato-benzuolsulfonsäuremethylester, können für die Herstellung der Polyurethan-Dispersionen als Verbindungen mit potentiellen ionischen Gruppen mitverwendet werden, da durch ihre Reaktion mit beispielsweise tertiären Aminen ebenfalls homöopolar gebundene kationische Gruppen in das Polyadditionsprodukt eingeführt werden.

Vorzugsweise erfolgt jedoch die Einführung der kationischen und anionischen Gruppen durch Mitverwendung von (potentielle) kationische Gruppen aufweisenden Verbindungen mit gegenüber Isocyanatgruppen reaktionsfähigen Wasserstoffatomen und (potentielle) anionische Gruppen aufweisenden Verbindungen mit gegenüber Isocyanatgruppen reaktionsfähigen Wasserstoffatomen. Zu dieser Gruppe von Verbindungen gehören beispielsweise tertiäre Stickstoffatome aufweisende Polyether mit vorzugsweise zwei endständigen Hydroxylgruppen, wie sie beispielsweise durch Alkoxylierung von zwei an Aminstickstoff gebundene Wasserstoffatome aufweisenden Aminen, z.B. N-Methylamin, Anilin oder N,N'-Dimethylhydrazin, in an sich üblicher Weise zugänglich sind. Derartige Polyether weisen im allgemeinen ein zwischen 500 und 6000 liegendes Molekulargewicht auf. Vorzugsweise werden jedoch die ionischen Gruppen durch Mitverwendung von vergleichsweise niedermolekularen Verbindungen mit (potentiellen) ionischen Gruppen und gegenüber Isocyanatgruppen reaktionsfähigen Gruppen eingeführt. Beispiele hierfür sind in der US-PS 3 479 310, DE-A 2 437 218 und DE-A 2 426 401 aufgeführt. Auch Dihydroxyphosphonate, wie das Natriumsalz des 2,3-Dihydroxypropan-phosphonsäure-ethylesters oder das entsprechende Natriumsalz der nichtveresterten Phosphonsäure, können als ionische Aufbaukomponenten mitverwendet werden.

Besonders bevorzugte (potentielle) ionische Aufbaukomponenten d) sind vor allem N-Alkyldialkanolamine, z.B. N-Methyldiethanolamin, N-Ethyldiethanolamin, Diaminosulfonate, wie das Na-Salz der N-(2-Aminoethyl)2-aminoethansulfonsäure, Dihydroxysulfonate, Dihydroxycarbonsäuren, wie Dimethylolpropionsäure, Diaminocarbonsäuren bzw. -carboxylate, wie Lysin oder das Na-Salz der N-(2-Aminoethyl)-2-aminoethancarbonsäure und Diamine mit mindestens einem zusätzlichen tertiären Aminstickstoffatom, z.B. N-Methyl-bis-(3-aminopropyl)-amin.

Die Überführung der gegebenenfalls zunächst in das Polyadditionsprodukt eingebauten potentiellen ionischen Gruppen zumindest teilweise in ionische Gruppen geschieht in an sich üblicher Weise durch Neutralisation der potentiellen anionischen und kationischen Gruppen oder durch Quarternierung von tertiären aminischen Stickstoffatomen.

Zur Neutralisation von potentiellen anionischen Gruppen, z.B. Carboxylgruppen, werden anorganische und/oder organische Basen eingesetzt wie Natriumhydroxyd, Kaliumhydroxid, Kaliumcarbonat, Natriumhydrogencarbonat, Ammoniak oder primäre, sekundäre und besonders tertiäre Amine, z.B. Triethylamin und Dimethylaminopropanol.

Zur Überführung der potentiellen kationischen Gruppen, z.B. der tertiären Amingruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyljodid, Dimethylsulfat, Benzylchlorid, Chloressigsäureethylester oder Bromacetamid geeignet. Weitere geeignete Neutralisations- und Quarternierungsmittel sind in der US-PS 3 479 310, Spalte 6, beschrieben.

Diese Neutralisation oder Quarternisierung der potentiellen Ionengruppen kann vor, während, jedoch vorzugsweise nach der Isocyanat-Polyadditionsreaktion erfolgen.

Die Menge der Aufbaukomponente d), bei potentiellen ionengruppenhaltigen Komponenten unter Berücksichtigung des Neutralisations- oder Quarternisierungsgrades, ist so zu wählen, daß die Polyurethane einen Gehalt von 0,05 bis 2 m Äqu/g Polyurethan, vorzugsweise von 0,07 bis 1.0 und besonders bevorzugt von 0,1 bis 0,7 m Äqu/g Polyurethan an ionischen Gruppen aufweisen.

Bei den gegebenenfalls mitzuverwendenden Komponenten e) handelt es sich um einwertige Polyetheralkohole und/oder um organische Dihydroxylverbindungen mit seitenständig angeordneten Polyetherketten, jeweils des Molgewichtsbereiches 500 bis 10 000, vorzugsweise von 1 000 bis 3 000.

Einwertige Polyetheralkohole sind durch Alkoxylierung von einwertigen Startermolekülen, wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, vorzugsweise mindestens 65 Mol-% Ethylenoxid.

Organische Dihydroxylverbindungen mit seitenständig angeordneten Polyetherketten enthalten zumindest 40 %, vorzugsweise mindestens 65 Mol-% Ethylenoxid-Einheiten (insbesondere neben Propylenoxid-Einheiten) in der Polyetherkette. Beispiele hierfür sind z.B. in DE-A 23 14 512 und DE-A 26 51 505 beschrieben.

Weitere geeignete Stoffe dieser Art sind Polyether-1,3-Diole, z.B. das formal an einer Gruppe alkoxylierte Trimethylolpropan $C_2H_5-C(CH_2OH)_2-CH_2OXR$, wobei X für eine Polyalkylenoxidkette der vorstehend bei einwertigen Polyetheralkoholen angegebenen Art steht, die mit einem Alkylrest R, z.B. $CH_3$ abgeschlossen ist.

Durch die Komponente e) können in den Polyurethanen somit gegebenenfalls in end- und/oder seitenständig angeordneten Polyetherketten vorliegende Ethylenoxidsegmente eingebaut sein, die im Polyurethan neben den ionischen Gruppen den hydrophilen Charakter beeinflussen.

Die Verbindungen der beispielhaft genannten Art mit innerhalb von end-und/oder seitenständig angeordneten Polyetherketten vorliegenden Ethylenoxideinheiten werden, falls überhaupt, in solchen Mengen eingesetzt, daß in den erfindungsgemäßen Polyurethan-Dispersionen von 0 bis 10, vorzugsweise 0 bis 5 Gew.-%, innerhalb von end- und/oder seitenständig angeordneten Polyetherketten eingebauten Ethylenoxideinheiten in den Polyurethanen vorliegen. Die Gesamtmenge der hydrophilen Struktureinheiten (ionische Gruppen und Ethylenoxideinheiten der zuletzt genannten Art) muß jedoch stets so gewählt werden, daß die Dispergierbarkeit der Polyurethane in Wasser gewährleistet ist.

Bei den gegebenenfalls einzusetzenden Komponenten f) handelt es sich um mindestens difunktionelle Amin-Kettenverlängerer bzw. Vernetzer des Molgewichtsbereiches 32 bis 500, vorzugsweise von 60 bis 300 ohne tertiäre Aminogruppen. Beispiele hierfür sind Diamine, wie Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA), 4,4'-Diaminodicyclohexylmethan, 1,4-Diamino-cyclohexan, 1,2-Diamino-propan, Hydrazin, Hydrazinhydrat, oder Triamine, wie Diethylentriamin. Sie können in Anteilen von 0 bis 2,0 Mol/Mol Komponente b) eingesetzt sein, insbesondere zur Kettenverlängerung von isocyanatgruppenhaltigen Prepolymeren vor oder insbesondere im Falle von Triaminen nach der Dispergierung in Wasser.

Die aminogruppenhaltigen Kettenverlängerer können auch in blockierter Form, z.B. in Form der entsprechenden Ketimine (DE-B 27 25 589), Ketazine (DE-B 28 11 148, US-PS 4 269 748) oder Aminsalze (US-PS 4 292 226) eingesetzt sein. Auch Oxazolidine, wie sie beispielsweise gemäß DE-B 27 32 131 bzw. US-PS 4 192 937 verwendet werden, stellen verkappte Diamine dar, die für die Herstellung der erfindungsgemäßen Polyurethan-Dispersionen zur Kettenverlängerung der Isocyanat-Prepolymeren eingesetzt werden können. Bei der Verwendung derartiger verkappter Diamine werden diese im allgemeinen mit den Isocyanat-Prepolymeren in Abwesenheit von Wasser vermischt und diese Mischung anschließend mit dem Dispersionswasser oder einem Teil des Dispersionswassers vermischt, so daß intermediär hydrolytisch die

EP 0 272 566 B1

entsprechenden Diamine freigesetzt werden.

Weitere Beispiele von bei der Herstellung der Dispersionen als Komponente a) , b) oder c) einsetzbaren Verbindungen sind z.B. in High Polymers, Vol. XVI, "Polyurethanes, Chemistry and Technology", von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71 beschrieben.

Die Mitverwendung von im Sinne der Isocyanat-Polyadditionsreaktion trioder höherfunktionellen Verbindungen in geringen Anteilen zur Erzielung eines bestimmten Verzweigungsgrades ist ebenso möglich, wie die bereits erwähnte Mitverwendung von tri- oder höherfunktionellen Polyisocyanaten. Auch einwertige Alkohole, z.B. n-Butanol oder n-Dodecanol und Stearylalkohol können in geringen Mengen mitverwendet sein.

Die Isocyanatgruppen und die mit Isocyanat reaktionsfähigen Hydroxyl- und Aminogruppen sollen in ungefähr äquivalent molaren Verhältnissen eingesetzt sein. Das Verhältnis der Zahl der Isocyanatgruppen zur Zahl der insgesamt mit Isocyanat reaktionsfähigen Wasserstoffatome soll im Bereich von 0,9 bis 1,2, bevorzugt von 0,95 bis 1,1, insbesondere von 0,98 bis 1,03 liegen.

Zur Beschleunigung der Reaktion der Diisocyanate können die üblichen und bekannten Katalysatoren, wie Dibutylzinndilaurat, Zinn-II-octoat oder 1,4-Diazabicyclo-(2,2,2)-octan, mitverwendet sein.

Die Herstellung der wäßrigen Polyurethan-Dispersionen erfolgt nach an sich üblichen Verfahren. So kann z.B. zunächst aus den Komponenten a), b), c) und gegebenenfalls e) in der Schmelze oder in Gegenwart eines inerten mit Wasser mischbaren Lösungsmittels, wie Aceton, Tetrahydrofuran, Methylethylketon, oder N-Methylpyrrolidon ein Prepolymeres mit endständigen Isocyanatgruppen hergestellt werden. Die Reaktionstemperatur liegt im allgemeinen bei 20 bis 160°C, vorzugsweise bei 50 bis 100°C.

Wird als Polyisocyanat a) ein Gemisch aus (cyclo)-aliphatischem Diisocyanat und aromatischem Diisocyanat eingesetzt, werden die Diisocyanate entweder im Gemisch miteinander oder auch nacheinander mit den Hydroxylverbindungen b), c) und gegebenenfalls e) umgesetzt. Im letzten Fall ist es vorteilhaft, zuerst das aromatische und dann das (cyclo)-aliphatische Diisocyanat einzusetzen, um sicherzustellen, daß das Reaktionsprodukt mittelständige Segmente aus aromatischen Diisocyanat und Kettenverlängerer c) sowie endständige (cyclo)-aliphatische Isocyanatgruppen aufweist. Bei der stufenweisen Umsetzung der beiden Diisocyanate ist es nicht wesentlich, vor der Zugabe des (cyclo)-aliphatischen Diisocyanats das aromatische Diisocyanat vollständig umzusetzen, sondern das (cyclo)-aliphatische Diisocyanat kann häufig bereits zu einem Zeitpunkt zugesetzt werden, zu dem erst ein Teil des aromatischen Diisocyanats reagiert hat.

Die so erhaltenen Isocyanat-Prepolymeren werden gegebenenfalls nach (weiterer) Verdünnung mit Lösungsmitteln der oben genannten Art, bevorzugt niedrigsiedenden Lösungsmitteln mit Siedepunkten unter 100°C, bei einer Temperatur zwischen 20 und 80°C durch Umsetzen mit aminfunktionellen Produkten der Komponente d) und gegebenfalls f) kettenverlängert und in die hochmolekularen Polyurethane übergeführt. Die Lösung des durch Einbau der Komponente d) ionengruppentragenden gegebenenfalls nach Neutralisation oder Quarternisierung ionengruppendtragenden Polyurethans wird durch Einrühren von Wasser dispergiert, anschließend wird das Lösungsmittel abdestilliert.

Werden als (potentiell) ionengruppentragende Komponente d) hydroxylfunktionelle Produkte eingesetzt, werden die Komponenten a), b) c), d) und gegebenenfalls e) zu einem Polyurethan oder zu einem Isocyanat-Prepolymeren umgesetzt. Im ersten Fall wird das ionengruppentragende, gegebenenfalls nach Neutralisation oder Quarternisierung ionengruppentragende Polyurethan bzw. dessen Lösung in Wasser dispergiert. Bevorzugt ist jedoch der Weg über ein Isocyanat-Prepolymeres, das, wie oben angegeben, mit aminischen Kettenverlängerern d) und/oder gegebenenfalls f) zum hochmolekularen Polyurethan umgesetzt und in Wasser dispergiert wird.

Die Überführung potentieller Salzgruppen, z.B. Carboxylgruppen oder tertiärer Amingruppen in die entsprechenden Ionen erfolgt durch Neutralisation mit Basen oder Säuren oder durch Quarternisierung der tertiären Amingruppen vor der Durchmischung mit dem für das Dispergieren eingesetzten Wasser. Weiterhin ist es beispielsweise möglich, die zur Neutralisation der Carboxylgruppen benötigte Base bzw. der tertiären Amingruppen erforderliche Säure dem zum Dispergieren verwendeten Wasser zuzumischen. Es ist auch möglich, in den Isocyanat-Prepolymeren vorliegende potentielle Salzgruppen, z.B. Carboxylgruppen oder tertiäre Amingruppen, vor der Umsetzung mit aminischen Kettenverlängerern durch Neutralisation oder Quarternisierung mindestens teilweise in Salzgruppen zu überführen.

Weiterhin ist es möglich. ionengruppentragende oder potentiell ionengruppentragende Isocyanat-Prepolymere in Wasser zu dispergieren, im Fall von potentiell ionengruppentragenden Prepolymeren nach Neutralisation oder Quarternisierung oder unter Zusatz der Neutralisationsmittel Basen oder Säuren zum Dispergierwasser, und anschließend mit den aminischen Kettenverlängerern bzw. Vernetzern f) in disperser

6

Phase zum fertigen Polyurethan umzusetzen.

Die Menge des Dispergierwassers wird allgemein so bemessen, daß wäßrige Polyurethan-Dispersionen mit 10 bis 60 %, vorzugsweise mit 20 bis 50 % Feststoffgehalt erhalten werden.

Es ist auch möglich, die Polyurethan-Dispersionen nach dem sogenannten Schmelzdispergierverfahren entsprechend den Angaben in der US-PS 3 756 992 herzustellen, wobei durch geeignete Auswahl der Art und Mengenverhältnisse der eingesetzten Ausgangsmaterialien lediglich darauf zu achten ist, daß die resultierenden Polyurethane den erfindungsgemäßen Bedingungen des Gehalts an ionischen Gruppen und an erfindungswesentlichem Kettenverlänger-Anteil c) entsprechen.

Die Polyurethan-Dispersionen können als solche unmittelbar zum Verkleben beliebiger Substrate verwendet werden. Zur Erzielung spezieller Eigenschaften können die erfindungsgemäßen Dispersionen mit anderen Polymerdispersionen, abgemischt werden. Weiter können Zusatzstoffe, wie synthetische oder natürliche Harze, Weichmacher, Filmbildehilfsmittel, Lösungsmittel (niedrig- bis hochsiedend) und Füllstoffe zugesetzt werden.

Sie eignen sich zur Herstellung von Verklebungen von Gummi mit sich selbst oder anderen Materialien in der Schuhindustrie, z.B. zum Verkleben von Schuhschaft und -sohle und insbesondere im Kraftfahrzeugbau zum Verkleben von Innenausstattungsteilen. Die Verwendung der Polyurethan-Dispersionen zum Verkleben erfolgt nach den üblichen Methoden der Klebetechnologie bei Verarbeitung von wäßrigen Dispersions- bzw. Lösungsklebstoffen.

In den folgenden Beispielen beziehen sich alle Prozentangaben auf das Gewicht. Die darin angegebenen Molekulargewichte wurden über die Hydroxylzahl bestimmt.

Die Prüfung der Dispersionen auf ihre klebtechnischen Eigenschaften erfolgt nach DIN 53 273 auf jeweils gleichem Styrol-Butadien-Polymerisat-Gummisohlenmaterial der Shore-A-Härte 90 (Nora-Testmaterial der Firma Freudenberg, Weinheim).

Zur Prüfung der Klebstoffe werden aus den Testmaterialien Prüfkörper hergestellt. Vor dem Aufbringen des Klebstoffes wird das Gummimaterial mit Schleifpapier der Körnung 80 gründlich gerauht. Die beiden zu verklebenden Prüfkörper werden nach einmaligem Auftrag der Polyurethan-Dispersion, Abtrocknen bei Raumtemperatur und Aktivieren des Klebefilms unter IR-Lampen bei 80°C im Klebebereich zusammengelegt und 10 sec lang mit einem Druck von 0,5 N/mm$^2$ gepreßt. Die Schälfestigkeiten nach DIN 53 273 werden sofort nach der Verpressung und nach 5-tägiger Lagerung bestimmt. Die Messung der Wärmestandfestigkeit erfolgt gemäß DIN 53 273 nach 5-tägiger Lagerzeit der Verklebung. Die Prüfdaten zu den einzelnen Polyurethan-Dispersionen sind in der Tabelle am Ende der Beispiele zusammengestellt.

In den Beispielen werden folgende Abkürzungen verwendet:

PE ADS/H16:    Adipinsäure-Hexandiol-1,6-Polyesterol
PE ADS/B14 :   Adipinsäure-Butandiol-1,4-Polyesterol
B14 :          Butandiol-1,4
H16 :          Hexandiol-1,6
DBTL :         Dibutylzinndilaurat
TDI :          Toluoldiisocyanat (Isomerenverh. 2,4/2,6 = 80/20)
HDI :          Hexamethylendiisocyanat
IPDI :         Isophorondiisocyanat
MAPA :         N-Methyl-bis(3-aminopropyl)-amin
DAC-Salz :     Na-Salz der N-(2-Aminoethyl)-2-aminoethancarbonsäure (40 % wäßrige Lösung)

Beispiel 1

```
          711    g PE ADS/H16 (Molgew. 1777)
A   ⎡     72,1 g B14
    ⎢      0,1 g DBTL-Katal.
    ⎣    240    g Aceton I

         123,6 g TDI
         119,4 g HDI
        1000    g Aceton II
          30,8 g MAPA
          25,4 g Dimethylsulfat
        1500    g Wasser
```

Der Mischung A aus entwässertem Polyesterol, B14, Aceton I und Katalysator wird das TDI zugegeben.

Nach 1 Stunde Reaktionszeit bei 65°C wird das HDI zugesetzt und weitere 90 Minuten umgesetzt. Nach Zulauf des Aceton II hat die erhaltene Prepolymerlösung einen NCO-Gehalt von 0,75 %.

Bei 50°C wird mit MAPA kettenverlängert. Nach 5 Minuten wird mit Dimethylsulfat bei 55°C 30 Minuten quarternisiert. Danach wird mit Wasser unter Rühren dispergiert und anschließend das Aceton abdestilliert.

Man erhält eine feinteilige, stabile Polyurethan-Disperison eines Feststoffgehalts von 42 %.

Beispiel 2

```
      ┌    600    g  PE ADS/H16 (Molgew. 1729)
A    │    82,1  g  H16
      │     0,1  g  DBTL-Katal.
      └    100    g  Aceton I

            58,2  g  TDI
           222,7  g  IPDI
          1080    g  Aceton II
            41,7  g  MAPA
            21,8  g  Salzsäure (37 %ig)
             2,6  g  Phosphorsäure (85 %ig)
          1520    g  Wasser
```

Zu der Mischung A aus entwässertem Polyesterol, H16, Aceton I und Katalysator wird das TDI gegeben. Nach 1 Stunde Reaktionszeit bei 65°C wird das IPDI zugesetzt und weitere 2 Stunden bei 80°C umgesetzt. Nach Zulauf des Aceton II hat die erhaltene Prepolymerlösung einen NCO-Gehalt von 1,07 %.

Bei 50°C wird mit MAPA kettenverlängert und nach 5 Minuten die Salzsäure und Phosphorsäure zugegeben. Danach wird mit Wasser unter Rühren dispergiert und anschließend das Aceton abdestilliert.

Man erhält eine feinteilige, stabile Polyurethan-Dispersion eines Feststoffgehaltes von 44 %.

Beispiel 3

```
      ┌    500    g  PE ADS/H16 (Molgew. 1729)
A    │   104,3  g  B14
      │     0,1  g  DBTL-Katal.
      └    100    g  Aceton I

            76,0  g  TDI
           290,9  g  IPDI
          1090    g  Aceton II
            42,1  g  MAPA
            22,0  g  Salzsäure (37 %ig)
             2,6  g  Phosphorsäure (85 %ig)
          1540    g  Wasser
```

Wie in Beispiel 2 angegeben, wird eine Polyurethan-Dispersion hergestellt. Die Reaktion mit dem IPDI bei 80°C dauerte 75 Minuten. Die Prepolymerlösung hat einen NCO-Gehalt von 1,14 %. Man erhält eine feinteilige, stabile Polyurethan-Dispersion eines Feststoffgehalts von 43 %.

Beispiel 4

```
            396    g  PE ADS/H16 (Molgew. 1800)
    A        79,3 g  B14
             0,2  g  DBTL-Katal.
            100    g  Aceton I

            295,8 g  IPDI
            800    g  Aceton II
             33,4 g  MAPA
             17,5 g  Salzsäure (37 %ig)
              2,0 g  Phosphorsäure (85 %ig)
           1200    g  Wasser
```

Der Mischung A aus entwässertem Polyesterol, B14, Aceton I und Katalysator wird das IPDI zugegeben; es wird 3 Stunden bei 85°C umgesetzt. Nach Zulauf des Acetons II hat die erhaltene Prepolymerlösung einen NCO-Gehalt von 1,00 %. Gemäß den Angaben in Beispiel 2 wird nun kettenverlängert, das Salz gebildet, in Wasser dispergiert und Aceton abdestilliert.

Man erhält eine feinteilige, stabile Polyurethan-Dispersion eines Feststoffgehalts von 42 %.

Beispiel 5

```
            360    g  PE ADS/H16 (Molgew. 1800)
    A        90,1 g  B14
             0,2  g  DBTL-Katal.
            100    g  Aceton I

            318    g  IPDI
            800    g  Aceton II
             33,4 g  MAPA
             17,5 g  Salzsäure (37 %ig)
              2,0 g  Phosphorsäure (85 %ig)
           1200    g  Wasser
```

Wie in Beispiel 4 angegeben, wird eine Polyurethan-Dispersion hergestellt. Die Prepolymerlösung hat einen NCO-Gehalt von 1,03 %, die feinteilige, stabile Polyurethan-Dispersion einen Feststoffgehalt von 39 %.

Beispiel 6

```
            582    g  PE ADS/B14 (Molgew. 2328)
    A        45,1 g  B14
             0,2  g  DBTL-Katal.
            100    g  Aceton I

            189    g  IPDI
            800    g  Aceton II
             43,8 g  DAC-Salz-Lösung
           1250    g  Wasser
```

Wie in Beispiel 4 angegeben, wird eine acetonische Prepolymerlösung mit einem NCO-Gehalt von 0,47 % hergestellt. Bei 50°C wird die DAC-Salz-Lösung zugesetzt und 5 Minuten gerührt. Anschließend wird mit Wasser dispergiert und das Aceton abdestilliert.

Man erhält eine feinteilige, stabile Polyurethan-Dispersion eines Feststoffgehalts von 40 %.

Beispiel 7

```
         ┌   466    g PE ADS/B14 (Molgew. 2328)
      A  │    72,1  g B14
         │     0,2  g DBTL-Katal.
         └   100    g Aceton I

              94,8 g TDI
             121,1 g IPDI
             800   g Aceton II
              40,8 g DAC-Salz-Lösung
            1200   g Wasser
```

Wie in Beispiel 2 angegeben, wird eine acetonische Prepolymerlösung hergestellt (IPDI-Reaktion 2,5 Stunden bei 85°C) mit einem NCO-Gehalt von 0,40 %. Wie in Beispiel 6 angegeben, wird dann das Prepolymere kettenverlängert, in Wasser dispergiert und schließlich das Aceton abdestilliert.

Man erhält eine feinteilige, stabile Polyurethan-Dispersion eines Feststoffgehalts von 40 %.

Vergleichsbeispiel A

```
         ┌   711    g PE ADS/H16 (Molgew. 1777)
      A  │     4,7  g H16
         │     0,1  g DBTL-Katal.
         └   180    g Aceton I

              35,1 g TDI
              78,2 g HDI
             800   g Aceton II
              32,4 g MAPA
              26,7 g Dimethylsulfat
            1350   g Wasser
```

Wie in Beispiel 1 angegeben, wird eine acetonische Prepolymerlösung mit einem NCO-gehalt von 1,00 % hergestellt, mit MAPA kettenverlängert, mit Dimethylsulfat quarternisiert, in Wasser dispergiert und das Aceton abdestilliert. Man erhält eine feinteilige, stabile Polyurethan-Dispersion eines Feststoffgehalts von 39 %.

Vergleichsbeispiel B

```
         ┌   750    g PE ADS/H16 (Molgew. 1812)
      A  │    37,7  g B14
         │     0,1  g DBTL-Katal.
         └   237    g Aceton I

              89,7 g TDI
              86,6 g HDI
             950   g Aceton II
              28,5 g MAPA
              19,4 g Salzsäure (37 %ig)
            1500   g Wasser
```

Wie in Beispiel 1 angegeben, wird eine Prepolymerlösung mit einem NCO-Gehalt von 0,76 % hergestellt. Wie in Beispiel 2 angegeben, wird dann kettenverlängert, das Salz gebildet, in Wasser dispergiert und schließlich das Aceton abdestilliert.

Man erhält eine feinteilige, stabile Polyurethan-Dispersion eines Feststoffgehalts von 42 %.

Vergleichsbeispiel C

10

```
              742,2  g  PE ADS/B14 (Molgew. 2328)
       A        0,18 g  DBTL-Kat.
              210    g  Aceton I

               35,9 g  TDI
               35,2 g  HDI
              850    g  Aceton II
               43,0 g  DAC-Salz-Lösung
             1320    g  Wasser
```

Der Mischung A aus entwässertem Polyesterol, Katalysator und Aceton I wird das TDI zugegeben. Nach 1 Stunde Reaktionszeit bei 65°C wird das HDI zugesetzt und weitere 90 Minuten umgesetzt. Nach Zulauf des Acetons II hat die erhaltene Prepolymerlösung einen NCO-Gehalt von 0,42 %.

Bei 50°C wird nun DAC-Salz-Lösung zugesetzt und 5 Minuten gerührt. Anschließend wird mit Wasser dispergiert und das Aceton abdestilliert. Man erhält eine feinteilige, stabile Polyurethan-Dispersion eines Feststoffgehalts von 40 %.

Tabelle

Klebtechnische Eigenschaften der erfindungsgemäßen Polyurethan-Dispersionen (Beispiel 1 bis 7) und der Vergleichsprodukte A bis C.

a) Schälwerte auf Nora-Testmaterial, Sofortwerte und 5 Tage-Werte in N/mm

b) Wärmestandfestigkeit (WSF) in °C/N

| Beispiel | Ionencharakter | Mol PE/Mol Diol | Schälwerte N/mm sofort | 5 Tage | WSF °C/N |
|---|---|---|---|---|---|
| 1 | kation. | 1:2 (B14) | 2,2 | 5,0 | 60/20 |
| 2 | kation. | 1:2 (H16) | 1,4 | 4,0 | 60/20 |
| 3 | kation. | 1:4 (B14) | 1,0 | 2,9 | 90/20 |
| 4 | kation. | 1:4 (B14) | 1,6 | 3,1 | 80/30 |
| 5 | kation. | 1:5 (B14) | 1,2 | 2,6 | 90/25 |
| 6 | anion. | 1:2 (B14) | 2,5 | 4,1 | 70/20 |
| 7 | anion. | 1:4 (B14) | 1,4 | 3,0 | 80/20 |
| Vergleichs-beispiel | | | | | |
| A | kation. | 1:0,1 (H16) | 1,9 | 5,2 | 50/10 |
| B | kation. | 1:1 (B14) | 1,5 | 4,3 | 50/10 |
| C | anion. | – | 1,1 | 2,3 | 50/10 |

**Patentansprüche**

1. Verwendung von wäßrigen Dispersionen von Polyurethanen aus

a) organischen Polyisocyanaten und gegebenenfalls zusätzlich untergeordneten Mengen organischen Monoisocyanaten,

b) Polyesterpolyolen eines Molekulargewichtsbereichs von 500 bis 5 000 und gegebenenfalls zusätzlich bis zu 40 Gew.-%, bezogen auf die Gesamtmenge b) an Polyetherpolyolen des gleichen Molekulargewichtsbereichs,

c) organischen Hydroxylverbindungen eines Molekulargewichtsbereichs von 62 bis 400 mit zwei gegen Isocyanatgruppen reaktionsfähigen Endgruppen als Kettenverlängerer

d) Verbindungen mit Ionengruppen oder in Ionengruppen überführbaren Gruppen mit mindestens einer Isocyanatgruppe oder einer gegen Isocyanatgruppen reaktionsfähigen Hydroxyl- oder Aminogruppe,

e) gegebenenfalls monofunktionellen Polyetherolen und/oder Diolen mit seitenständigen Polyethersegmenten und jeweils mit mindestens 40 % Polyethylenoxid-Segmenten in der Etherkette,
f) gegebenenfalls mindestens zwei Aminogruppen tragenden Kettenverlängerern, die frei von Ionengruppen sind,

die einen über d) in das Polyurethan eingebauten Gehalt an ionischen Gruppen von 0,05 bis 2 mÄqu/g Polyurethan aufweisen und gegebenenfalls bis 10 Gew.-%, bezogen auf das Polyurethan, an end-und/oder seitenständigen Polyethylenoxid-Segmenten enthalten, die über e) in das Polyurethan eingebaut sind, dadurch gekennzeichnet, daß die Kettenverlängerer c) in einem Anteil von 1,5 bis 8 Mol je Mol Polyesterpolyolen und gegebenenfalls Polyetherpolyolen b) eingebaut sind und das Verhältnis der Zahl der Isocyanatgruppen zur Zahl der insgesamt mit Isocyanat reaktionsfähigen Wasserstoffatome im Bereich von 0,9 bis 1,2 liegt, als Klebstoffe.

## Claims

**1.** The use of an aqueous dispersion of a polyurethane consisting of
a) organic polyisocyanates, with or without minor amounts of organic monoisocyanates,
b) polyesterpolyols having a molecular weight of from 500 to 5,000 and, if required, additionally up to 40% by weight, based on the total amount of b), of polyetherpolyols having the same molecular weight range,
c) organic hydroxy compounds having a molecular weight of from 62 to 400 and two terminal groups which are reactive to isocyanate groups, as chain extenders,
d) compounds containing ionic groups or groups which can be converted to ionic groups and one or more isocyanate groups or a hydroxyl or amino group which is reactive to isocyanate groups,
e) with or without monofunctional polyetherols and/or diols which have polyether side segments and each contain not less than 40% of polyethylene oxide segments in the ether chain, and
f) with or without chain extenders which carry two or more amino groups and are free of ionic groups,

which contains from 0.05 to 2 meq of ionic groups incorporated into the polyurethane via d) per g of polyurethane and may contain up to 10% by weight, based on the polyurethane, of polyethylene oxide terminal and/or side segments which are incorporated into the polyurethane via e), wherein the chain extenders c) are incorporated in an amount from 1.5 to 8 males per mole of polyesterpolyols, where relevant, polyetherpolyols b) and the ratio of the number of isocyanate groups to the total number of hydrogen atoms capable of reacting with isocyanate is within the range from 0.9 to 1.2, as an adhesive.

## Revendications

**1.** Utilisation comme matières adhésives de dispersions aqueuses de polyuréthanes composés
a) de polyisocyanates organiques et éventuellement additionnellement de quantités secondaires de monoisocyanates organiques,
b) de polyesters-polyols d'une plage des poids moléculaires comprise entre 500 et 5 000 et éventuellement additionnellement de jusqu'à 40 % en poids, rapportés à la totalité de b), de polyétherspolyols d'une même plage des poids moléculaires,
c) de composés hydroxylés organiques en tant que propagateurs de chaîne, d'une plage des poids moléculaires comprise entre 62 et 400, présentant deux groupes terminaux réactifs vis-à-vis des groupes isocyanate, en tant que prolongateurs de chaîne,
d) de composés à groupes ioniques ou groupes transformables en groupes ioniques présentant au moins un groupe isocyanate ou un gorupe hydroxyle ou amino réactif vis-à-vis des groupes isocyanate,
e) éventuellement de polyéthers-ols et/ou diols monofonctionnels à segments polyéther latéraux et chacun à au moins 40 % de segments polyéthylènoxyde dans la chaîne éther,
f) éventuellement de prolongateurs de chaîne portant au moins deux groupes amino, qui sont exempts de groupes ioniques,

qui présentent une teneur en groupes ioniques, incorporée par l'intermédiaire de d) dans le polyuréthane,comprise entre 0,05 et 2 méqu/g de polyuréthane et contiennent éventuellement jusqu'à 10 % en poids, rapportés au polyuréthane, de segments polyethylènoxyde terminaux et/ou latéraux, introduits par l'intermédiaire de e) dans le polyuréthane, caractérisées par le fait que les prolongateurs de chaîne c) sont incorporés en une proportion de 1,5 à 8 moles par mole de polyesters-polyols et éventuellement polyéthers-polyols b) et le rapport du nombre des groupes isocyanate au nombre des atomes d'hydrogène susceptibles de réagir au total avec de l'isocyanate, est compris entre 0,9 et 1,2.